# EUROPÄISCHE PATENTSCHRIFT

(11) **EP 0 772 487 B1**
(45) Veröffentlichungstag und Bekanntmachung des Hinweises auf die Patenterteilung: **07.10.1998**
(21) Anmeldenummer: 95924979.8
(22) Anmeldetag: 06.07.1995
(51) Int. Cl.: B01D 53/66

(54) **VERFAHREN UND FILTER ZUR ENTFERNUNG VON ORGANISCHEN STOFFEN UND OZON AUS GASEN**
PROCESS AND FILTER FOR REMOVING ORGANIC SUBSTANCES AND OZONE FROM GASES
PROCEDE ET DISPOSITIF DE FILTRATION POUR L'ELIMINATION DE MATIERES ORGANIQUES ET DE L'OZONE DANS DES GAZ

(30) Priorität: 21.07.1994 DE 4425913
(43) Veröffentlichungstag der Anmeldung: 14.05.1997
(73) Patentinhaber: Ticona GmbH, 65926 Frankfurt am Main (DE)
(72) Erfinder: SCHLEICHER, Andreas, D-65614 Beselich (DE); VON EYSMONDT, Jörg, D-65719 Hofheim (DE); FRANK, Georg, D-72074 Tübingen (DE)
(86) Internationale Anmeldenummer: EP9502624
(87) Internationale Veröffentlichungsnummer: WO9603201

(56) Entgegenhaltungen:
- DE-A- 1 937 574
- DE-A- 4 314 734
- FR-A- 2 510 904
- GB-A- 1 532 227

## Beschreibung

Die Erfindung betrifft ein Verfahren sowie das zugehörige Filtersystem, bei dem ein mit organischen Stoffen und Ozon beladener Gasstrom zunächst mit einem Ozon-bindenden Polymer und dann mit Aktivkohle in Kontakt gebracht wird.

Aktivkohle wird als Adsorbens zur Entfernung unerwünschter organischer Stoffe wie Benzin- oder Lösemitteldämpfe aus Gasen verwendet (Römpp Chemie Lexikon, J. Falbe und M. Regitz (Eds.), 9. Auflage, Band 1, Georg Thieme Verlag, Stuttgart - New York 1989, S. 83). Aktivkohle kann Ozon abbauen und wird als Filtermaterial zur Entfernung von Ozon aus Gasen eingesetzt.

Die FR-A-2 150 904 beschreigt die Entfernung von organischen Stoffen und Ozon aus Gasen mittels einem Aktirkohle filter.

Wird Aktivkohle zur Reinigung von Gasen, die Ozon und organische Stoffe wie Kohlenwasserstoffe enthalten, eingesetzt, so treten bei einer fortgeschrittenen Beladung der Aktivkohle mit organischen Stoffen folgende unerwünschte Effekte auf (siehe "Comparison of adsorption characteristics for VOC on activated carbon and oxidized activated carbon", J.H. You, H.L. Chiang, P.C. Chiang, Environ. Progr. 13 (1994) 31-36):
- Ozon reagiert nicht mehr mit der Aktivkohle direkt, sondern mit den bereits adsorbierten organischen Stoffen und baut diese teilweise chemisch ab, insbesondere dann, wenn es sich um ungesättigte Verbindungen handelt.
- Die bei der Ozon-Oxidation adsorbierter organischer Stoffe entstehenden Abbauprodukte desorbieren von der Aktivkohle, so daß die Reinigungswirkung der Aktivkohle bei Anwesenheit von Ozon verschlechtert wird. Die desorbierten Abbauprodukte (z.B. Formaldehyd) sind zum Teil giftiger als die ursprünglich adsorbierten organischen Stoffe.
- Bei Anwesenheit von Ozon im zu reinigenden Gas besteht die Gefahr einer Entzündung der Aktivkohle, insbesondere wenn die zu reinigenden Abluftströme höhere Konzentrationen von Ozon oder organischen Stoffen aufweisen.

Andere, gebräuchliche Ozon abbauende Materialien führen zu Schwierigkeiten bei der Reinigung von Gasen, die Ozon und organische Stoffe enthalten:
- Die üblichen Ozon-abbauenden Materialien wie Mischoxide oder edelmetallhaltige Verbindungen verlieren sehr schnell ihre Ozon abbauende Wirkung in Gegenwart von Kohlenwasserstoffen.
- Anorganische Materialien können Stäube bilden.
- Viele Ozon abbauenden Materialien (z.B. Mischoxide) sind empfindlich gegenüber hoher Luftfeuchtigkeit.
- Viele Ozon abbauenden Materialien (z.B. Edelmetalle) sind empfindlich gegenüber Spurengasen (H₂S, SO₂, Formaldehyd), die als Katalysatorgifte wirken.

Die Aufgabe der Erfindung war es daher, einen geeigneten Filter zur Entfernung von organischen Stoffen und Ozon aus Gasen zu entwickeln, das nicht die Nachteile bekannter Filtersysteme aufweist und trotzdem die günstigen Eigenschaften von Aktivkohle zur Entfernung von organischen Stoffen nutzt.

Es wurde gefunden, daß bestimmte Polymere wie Polyphenylensulfid oder 2,6-Dimethyl-Polyphenylenoxid mit Ozon reagieren, ohne daß deren Filterwirkung durch organische Stoffe wie Kohlenwasserstoffe oder andere flüchtige organische Verbindungen beeinträchtigt wird. Daher ist es möglich, die Reinigung von Gasen, die Ozon und organische Stoffe enthalten, zu entkoppeln indem das Gas zunächst mit dem Ozon-bindenden Polymer und dann mit Aktivkohle in Kontakt gebracht wird.

Die Erfindung betrifft daher ein Verfahren zur Entfernung von Ozon und organischen Stoffen aus Gasen, wobei das Gas zuerst mit einem Ozon-bindenden Polymer und dann mit Aktivkohle in Kontakt gebracht wird.

Das Ozon-bindende Polymer umfaßt Polyarylenether und schwefelhaltige Polymere.

Polyarylenether bezeichnen Polymere, die Methyl-substituierte Arylenether-Einheiten enthalten. Als Polyarylenether wird 2,6-Dimethyl-Polyphenylenoxid bzw. 2,6-Dimethyl-Polyphenylenether (zu Eigenschaften und Herstellung siehe Ullmann's Encyclopedia of Industrial Chemistry, Vol. A21, 5. Auflage, B. Elvers, S. Hawkins und G. Schulz (Eds.), VCH Publishers, Weinheim-New York 1992, S. 605 ff.) bevorzugt verwendet.

Der Ausdruck schwefelhaltige Polymere umfaßt alle Polymere, die mindestens eine Arylenthioether-Einheit (-Ar-S-; Ar: Arylen) enthalten. Die Arylengruppen können aus ein- oder mehrkernigen Aromaten bestehen. Die Arylengruppen bestehen aus mindestens einem fünf- oder sechsgliedrigen Ring, der ein oder mehrere Heteroatome enthalten und gegebenenfalls substituiert sein kann. Heteroatome sind z.B. Stickstoff oder Sauerstoff, Substituenten sind z.B. lineare oder verzweigte Alkylgruppen. Die schwefelhaltigen Polymere können außer Schwefelbrücken (-S-) auch Sulfoxidgruppen (-SO-) oder Sulfongruppen (-SO₂-) enthalten.

Schwefelhaltige Polymere sind beispielsweise lineare oder verzweigte Polyarylensulfidsysteme (mittleres Molekulargewicht, Mw: 4000-200000) mit der Wiederholungseinheit der Formel I, die mindestens eine Thioethergruppe enthalten,

-[(Ar¹)ₙ-X]ₘ-[(Ar²)ᵢ-Y]ⱼ-[(Ar³)ₖ-Z]ₗ-[(Ar⁴)ₒ-W]ₚ- (I)

wobei Ar¹, Ar², Ar³, Ar⁴, W, X, Y und Z unabhängig voneinander gleich oder verschieden sind. Die Indizes n, m, i, j, k, l, o und p sind ganze Zahlen von 0 bis 4 wobei ihre Summe mindestens 2 ergeben muß. Ar¹, Ar² Ar³ und Ar⁴ stehen in der Formel (I) für einfache oder direkt über para-, meta- oder orthoverknüpfte Arylsysteme mit 6 bis 18 C-Atomen. W, X, Y und Z stellen Verknüpfungsgruppen dar, ausgewählt aus -SO₂-, -S-, -SO-, -O-, -CO-, -CO₂-, Alkyl- oder Alkylidengruppen mit 1-6 C-Atomen und -NR¹-Gruppen, wobei R¹ für Alkyl- oder Alkyliden-Gruppen mit 1-6 C-Atomen steht. Die Arylsysteme der Formel (I) können gegebenenfalls zusätzlich unabhängig voneinander ein oder mehrere funktionelle Gruppen wie Alkylreste, Halogene, Sulfonsäure-, Amino-, Nitro-, Cyano-, Hydroxy- oder Carboxygruppen enthalten. Ferner sind auch Blockcopolymere aus Einheiten der Formel (I) einsetzbar.

Polyarylenthioether, insbesondere Polyphenylensulfid, lassen sich auf Grundlage der Reaktion von dihalogenierten Aromaten mit Natriumsulfid nach EDMONDS und HILL (US 3 354 129; US 4 016 145; siehe auch "Ullmann's Encyclopedia of Industrial Chemistry, Volume A21, B. Elvers, S. Hawkins und G. Schulz (Eds.), VCH, Weinheim-New York 1992, S. 463) herstellen. Die Synthese von sulfongruppenhaltigen Polyarylenthioethern ist in Chimia 28(9), (1974) 567 beschrieben.

Polyphenylensulfid (PPS) wird als schwefelhaltiges Polymer bevorzugt verwendet. Die Arylengruppen im PPS können 1,4- und/oder 1,3-Verknüpfungen aufweisen. PPS bezeichnet sowohl das lineare als auch das vernetzte Polymer. Ferner kann PPS pro Arylengruppe unabhängig voneinander 1 bis 4 funktionelle Gruppen enthalten, z.B. Alkylreste, Halogene, Sulfonsäure-, Hydroxy-, Amino-, Nitro-, Cyano- oder Carboxygruppen.

Werden Polyarylenthioether gemäß der Erfindung eingesetzt, so sind im allgemeinen Polyarylenthioether geeignet, die ein mittleres Molekulargewicht von 4000 bis 200000, vorzugsweise 10000 bis 150000, insbesondere 25000 bis 100000, aufweisen.

Die Ozon-bindenden Polymere können als Pulver, Granulat, Faser, Vlies, Filz, Gewebe, Folie, gesintertes Material, Schaum, Formkörper oder als Beschichtung oder Imprägnierung von Trägermaterialien eingesetzt werden. Insbesondere sind Formkörper mit besonders großer Oberfläche, z.B. mit Gitter- oder Wabenstruktur, geeignet. Die Pulver besitzen z.B. handelsübliche Teilchengrößen, wobei auch Granulate verwendbar sind. Wichtig hierbei ist es, daß das zu behandelnde Gas oder die Flüssigkeit durch das Polymermaterial, beispielsweise in Form eines Pulver-Festbettes, ohne Störung durchgeleitet werden kann. Werden die Polymere als Fasern verwendet, können diese als Stapelfasern, Nadelfilz, "non woven" Material, Kardenband oder Gewebe eingesetzt werden. Auch Folien oder Folienschnipsel können in geeigneter Form Verwendung finden.

Beschichtungen von Trägermaterialien mit Ozon-bindendem Polymer wie Polyphenylensulfid oder 2,6-Dimethyl-Polyphenylenoxid können durch Auftragen von Lösungen des schwefelhaltigen Polymers auf das Trägermaterial erhalten werden. Imprägnierungen werden z.B. durch Tränken eines saugfähigen Trägermaterials hergestellt. Als Trägermaterial werden im allgemeinen anorganische Stoffe wie Glas, Kieselgel, Aluminiumoxid, Sand, keramische Massen, Metall und organische Stoffe wie Kunststoffe eingesetzt.

Auf die Ozon-bindenden Polymere können auch z.B. Metalle, insbesondere Edelmetalle und Übergangsmetalle, oder Metalloxide wie Übergangsmetalloxide, beispielsweise durch Aufimprägnieren aufgebracht werden, die dann z.B. in Form kleiner Cluster vorliegen.

Das Ozon-bindende Polymer kann im allgemeinen als unverschnittenes Material eingesetzt werden. Möglich ist aber auch der Zusatz von üblichen Füllstoffen, wie Kreide, Talk, Ton, Glimmer, und/oder faserförmigen Verstärkungsmitteln, wie Glas- und/oder Kohlenstoffasern, Whiskers, sowie weiteren üblichen Zusatzstoffen und Verarbeitungshilfmitteln, z.B. Gleitmittel, Trennmittel, Antioxidantien, UV-Stabilisatoren.

Weiterer Gegenstand der Erfindung ist ein Filter, das mindestens ein Ozon-bindendes Polymer und Aktivkohle enthält. Das Filter ist so aufgebaut, daß der zu reinigende Gasstrom zuerst mit dem Ozon-bindenden Polymer und dann mit der Aktivkohle in Kontakt gebracht wird.

Das Filter kann aus einem einzigen Element bestehen, das das Ozon-bindende Polymer und die Aktivkohle enthält. Ein solches Filter wird als Kombinationsfilter bezeichnet. Das Filter kann auch aus einzelnen Filtern (ein Filter, das Ozonbindendes Polymer enthält, und ein Filter, das Aktivkohle enthält) bestehen, die hintereinandergeschaltet sind.

Überraschenderweise wird durch die Kombination von Ozon-bindendem Polymer und Aktivkohle die Standzeit der Aktivkohle als Adsorbens erhöht.

Bei Einsatz des erfindungsgemäßen Filters oder Durchführung des erfindungsgemäßen Verfahrens werden in der Regel Filterkontaktzeiten von 0,1 bis 60 sec, vorzugsweise bei 0,2 bis 5 sec und linearen Anströmgeschwindigkeiten von 0,02 bis 1 Meter pro Sekunde, vorzugsweise 0,05 - 0,5 Meter pro Sekunde, benutzt.

Mit dem erfindungsgemäßen Filter oder Verfahren können Gase gereinigt werden, die organische Stoffe in hoher Konzentration (z.B. 1000 ppm) enthalten. Im allgemeinen arbeitet das Filter oder das Verfahren bei Konzentrationen organischer Stoffe in den zu reinigenden Gasen im Bereich von 0,05 bis 100 ppm. Die organischen Stoffe können beispielsweise gesättigte oder ungesättigte Kohlenwasserstoffe und aromatische Verbindungen sein, insbesondere Verbindungen, die in Benzindämpfen enthalten sind, wie Benzol, Toluol, tert. Butylmethylether und lineare oder verzweigte C₄- bis C₁₂-Alkane.

Die zu reinigenden Gase können alle Arten von Gasen oder Abgasen sein, die bei industriellen oder geophysikalischen Prozessen entstehen. Das Verfahren eignet sich besonders zur Reinigung schadstoffhaltiger Luft, wie sie bei der Verbrennung fossiler Rohstoffe in Kombination mit intensiver Sonneneinstrahlung entsteht ("Photosmog")

Das erfindungsgemäße Filter und Verfahren zeichnen sich durch folgende Vorteile aus:
- Das polymere Filtermaterial bindet Ozon quantitativ und wird durch Kohlenwasserstoffe, Spurengase und Luftfeuchtigkeit nicht beeinflußt. Über die nachgeschaltete Aktivkohle wird daher nur Ozon-freie Luft geleitet, so daß keine schädlichen Abbauprodukte mehr durch Ozon auf der beladenen Aktivkohle erzeugt werden können und kein Abbau der Aktivkohle durch Ozon erfolgt.
- Durch die Entkopplung von Ozon-Filterung und Adsorption von organischen Stoffen wird eine Oxidation der adsorbierten organischen Stoffe vermieden.
- Das Ozon-bindende Filtermaterial kann in unterschiedlichster Form z.B. als Fasermaterial (Vlies, Gewebe, Stapelfaser etc.) oder Granulat mit unterschiedlicher Körnung eingesetzt werden.
- Die schwefelhaltigen Polymere, insbesondere Polyarylenthioether, sind flammhemmend, lösemittelbeständig, besitzen Schmelzpunkte über 250°C, sind nicht toxisch und adsorbieren praktisch keine Kohlenwasserstoffe. Bei dem beanspruchten Kombinationsfilter sind daher gegenüber der üblichen Aktivkohle-Filtern praktisch keine Einschränkungen zu erwarten.
- Durch die genannte Kombination von Ozon-bindendem Polymer und Aktivkohle gelingt eine signifikante Standzeitverlängerung der Aktivkohle.

### Beispiele:

### Allgemeiner Versuchsaufbau:

In einer Laborapparatur wurde Umgebungsluft über ein Gebläse angesaugt, mit Kohlenwasserstoffen, Ozon und Luftfeuchtigkeit angereichert und anschließend über das Filter geleitet.

Als Ozon-Generator wurde ein handelsüblicher Ozon-Prüfgasgenerator der Fa. Horiba (Industriestraße 8, 61449 Steinbach) eingesetzt. Vom gleichen Hersteller stammten die Analysengeräte zur Messung der Ozon-Konzentrationen (Typ APOA 350E) und der Kohlenwasserstoff-Konzentrationen (Typ APHA 350E).

Die in den Versuchen eingesetzten Filter bestanden aus einem Glasrohr mit 2,5 cm Innendurchmesser und 10 cm Länge, die mit Polyphenylensulfid und Aktivkohle, mit Aktivkohle oder mit Polyphenylensulfid gefüllt wurden. Bei Filtern mit verschiedenen Filtermaterialien wurde zur Vermeidung einer Vermischung etwas Glasfaserwatte zwischen die Filtermaterialien gegeben.

Die Volumenströme wurden über Strömungmesser kontrolliert.

### Beispiel 1: Vergleich Kombinationsfilter / Aktivkohlefilter

- Aktivkohle:: granulierte Aktivkohle (Dräger, Lübeck)
- Ozon-bindendes Polymer:: 1,4-Polyphenylensulfid (PPS), Korngröße 0,5 - 1 mm
- Filter, Beispiel 1.1:: 2 g PPS + 6 g Aktivkohle
- Filter, Beispiel 1.2 (Vergleichsversuch):: 6 g Aktivkohle
- Volumenstrom:: 180 Liter pro Stunde pro Filter
- Temperatur:: 25° C
- Ozon-Eingangkonzentration:: 350 Mikrogramm pro Kubikmeter (175 ppb)
- Organische Stoffe-Eingangskonzentration:: 40 ppm (Gemisch aus 50 % Toluol und 50 % Petrolether)
- relative Luftfeuchte:: 40 - 50 %

**Tabelle 1**

| Versuchsergebnisse | | |
|---|---|---|
| Versuchsdauer [h] | Ozon (hinter Filter) [ppm] | Organische Stoffe (hinter Filter)[ppm] |
| | Beispiel 1.1 / Beispiel 1.2 | Beispiel 1.1 / Beispiel 2 |
| 1 | 0,001 / 0,001 | 0 / 0 |
| 22 | 0,002 / 0,002 | 0 / 0,3 |
| 45 | 0,002 / 0,002 | 0,6 / 0,9 |
| 70 | 0,002 / 0,002 | 1,1 / 4,7 |
| 85 | 0,001 / 0,002 | 4,8 / 11,2 |
| 110 | 0,002 / 0,002 | 9,1 / 14,8 |

Der Durchbruch von organischen Stoffen erfolgt bei dem Kombinationsfilter (Beispiel 1.1) etwa 10 Stunden später als beim einfachen Aktivkohlefilter (Beispiel 1.2). Das Kombinationsfilter von Beispiel 1.1 zeigt eine höhere Adsorptionskapazität für organische Stoffe als ein Aktivkohlefilter (Beispiel 1.2).

### Beispiel 2: Vergleichsversuch Aktivkohle/PPS- Kombinationsfilter in unterschiedlicher Anordnung

- Aktivkohle:: granulierte Aktivkohle (Riedel de Haen)
- Ozon-bindendes Polymer:: 1,4 Polyphenylensulfid (PPS), Korngröße 0,5 - 1 mm
- Filter, Beispiel 2.1:: 2 g PPS/6 g Aktivkohle
- Filter, Beispiel 2.2 (Vergleichsversuch):: 6 g Aktivkohle/2 g PPS
- Volumenstrom:: 180 ℓ/h pro Filter
- Temperatur:: 25 °C
- Ozon-Eingangkonzentration:: 260 Mikrogramm pro Kubikmeter (130 ppb)
- Organische Stoffe-Eingangskonzentration:: 50 ppm (Gemisch aus 50 % Toluol und 50 % Petrolether)
- rel. Luftfeuchte:: 40 - 50 %

**Tabelle 2**

| Versuchsergebnisse | | |
|---|---|---|
| Versuchsdauer [h] | Ozon (hinter Filter) [ppm] | Organische Stoffe (hinter Filter) [ppm] |
| | Beispiel 2.1 / Beispiel 2.2 | Beispiel 2.1 / Beispiel 2.2 |
| 1 | 0,0 /0,0 | 0 / 0 |
| 22 | 0,0 /0,0 | 0 / 0 |
| 50 | 0,0 /0,0 | 0 / 0 |
| 77 | 0,0 /0,0 | 3,4 / 3,9 |
| 99 | 0,0 /0,0 | 12,7 / 14,6 |
| 194 | 0,0 /0,0 | 41,6 / 44,3 |

In dem Versuch werden die Eigenschaften von Filtern verglichen, in denen das zu reinigende Gas durch PPS und Aktivkohle geleitet wird und die Reihenfolge der Filtermaterialien PPS/Aktivkohle (Beispiel 2.1) und Aktivkohle/PPS (Beispiel 2.2) ist.

Die Ergebnisse zeigen, daß der Durchbruch von organischen Stoffen durch einen Aktivkohlefilter verringert wird, wenn ein Ozon-bindendes Polymer vor dem Aktivkohlefilter angebracht wird (Beispiel 2.1). Im umgekehrten Fall (Ozon-bindendes Polymer nach der Aktivkohle, Beispiel 2.2) sind die Standzeiten bis zum Durchbruch organischer Stoffe geringer.

### Beispiel 3: Adsorption von organischen Stoffen durch 1,4-Polyphenylensulfid

- Aktivkohle:: granulierte Aktivkohle (Riedel de Haen)
- Ozon-bindendes Polymer:: 1,4-Polyphenylensulfid (PPS) Korngröße 0,5 - 1 mm
- Filter, Beispiel 3.1 :: 2 g PPS
- Filter, Beispiel 3.2 (Vergleichsversuch):: 6 g PPS
- Volumenstrom.: 180 ℓ/h pro Filter
- Temperatur:: 25 °C
- Ozon-Eingangkonzentration:: 260 Mikrogramm pro Kubikmeter (130 ppb)
- Organische Stoffe-Eingangskonzentration:: 50 ppm (Gemisch aus 50 % Toluol und 50 % Petrolether)
- rel. Luftfeuchte:: 40 - 50 %

**Tabelle 3**

| Versuchsergebnisse | | |
|---|---|---|
| Versuchsdauer [Min] | Ozon (hinter Filter) [ppm] | Organische Stoffe (hinter Filter) [ppm] |
| | Beispiel 3.1 / Beispiel 3.2 | Beispiel 3.1 / Beispiel 3.2 |
| 1 | 0,0 /0,0 | 10 / 8 |
| 5 | 0,0 /0,0 | 49,2 / 48,6 |
| 10 | 0,0 /0,0 | 50 / 50 |

Die Ergebnisse zeigen, daß eine Adsorption organischer Stoffe an Polyphenylensulfid praktisch nicht erfolgt. Die Aufnahmekapazität für organische Stoffe ist kleiner als 0,01 %, bezogen auf das Eigengewicht des Polymers. Bei Aktivkohle liegt der Wert bei ca. 5 - 10 % des Eigengewichts. Daher kann die verbesserte Adsorptionswirkung des Kombinationsfilters PPS/Aktivkohle für Organika nicht auf einen zusätzlichen Adsorptionseffekt durch das Polymers zurückgeführt werden, sondern auf die beschriebenen unterschiedlichen Eigenschaften von Aktivkohlen und PPS, die sich in idealer Weise ergänzen.

## Patentansprüche

1. Verfahren zur Entfernung von Ozon und organischen Stoffen aus Gasen, dadurch gekennzeichnet, daß das Gas zuerst mit einem Ozon-bindenden Polymer aus der Gruppe der Polyarylenether und schwefelhaltigen Polymere und dann mit Aktivkohle in Kontakt gebracht wird.

2. Filter zur Entfernung von Ozon und organischen Stoffen aus Gasen, dadurch gekennzeichnet, daß das Filter mindestens ein Ozon-bindendes Polymer aus der Gruppe der Polyarylenether und schwefelhaltigen Polymere und Aktivkohle enthält.

3. Verfahren nach Anspruch 1 oder Filter nach Anspruch 2, dadurch gekennzeichnet, daß das Ozon-bindende Polymer ein 2,6-Dimethyl-Polyphenylenoxid oder ein Polyarylenthioether, vorzugsweise Polyphenylensulfid ist.

4. Verfahren nach Anspruch 1 oder Filter nach Anspruch 2, dadurch gekennzeichnet, daß der Polyarylenether 2,6-Dimethyl-phenoxy-Einheiten enthält.

5. Verfahren nach Anspruch 1 oder Filter nach Anspruch 2, dadurch gekennzeichnet, daß das Ozon-bindende Polymer als Pulver, Granulat, Faser, Vlies, Filz, Gewebe, Stapelfaser, Folie, Folienteil, Formkörper oder deren Kombination eingesetzt wird.

6. Verfahren nach Anspruch 1, dadurch gekennzeichnet, daß die Arbeitstemperatur im Bereich von minus 10°C bis 150°C, vorzugsweise bei 10 bis 50°C, liegt.

7. Verfahren nach Anspruch 1 oder Filter nach Anspruch 2, dadurch gekennzeichnet, daß der zu entfernende organische Stoff eine aliphatische oder aromatische Verbindung ist.

8. Verfahren nach Anspruch 1 oder Filter nach Anspruch 2, dadurch gekennzeichnet, daß der zu entfernende organische Stoff mindestens eine Verbindung ist, die in Benzindämpfen enthalten ist.

9. Verfahren nach Anspruch 1 oder Filter nach Anspruch 2, dadurch gekennzeichnet, daß der zu entfernende organische Stoff ein gesättigter oder ungesättigter Kohlenwasserstoff ist, vorzugsweise Benzol, Toluol, tert.-Butylmethylether, lineare oder verweigte C₄- bis C₁₂- Alkane.

10. Verfahren nach Anspruch 1 oder Filter nach Anspruch 2, dadurch gekennzeichnet, daß das Filter aus einer Kombination von einem Ozon-Filter und einem Filter für organische Stoffe oder aus einem einzigen Filter, das beide Filtereinheiten enthält, besteht.

## Claims

1. A process for removing ozone and organic substances from gases, which comprises first contacting the gas with an ozone-binding polymer from the group consisting of poly(arylene ethers) and sulfur-containing polymers and then with activated carbon.

2. A filter for removing ozone and organic substances from gases, wherein the filter contains at least one ozone-binding polymer from the group consisting of poly(arylene ethers) and sulfur-containing polymers and activated carbon.

3. The process as claimed in claim 1 or the filter as claimed in claim 2, wherein the ozone-binding polymer is a poly(2,6-dimethylphenylene oxide) or a poly(arylene thioether), preferably poly(phenylene sulfide).

4. The process as claimed in claim 1 or the filter as claimed in claim 2, wherein the poly(arylene ether) contains 2,6-dimethylphenoxy units.

5. The process as claimed in claim 1 or the filter as claimed in claim 2, wherein the ozone-binding polymer is used as powder, granules, fiber, nonwoven web, felt, fabric, staple fiber, film, film part, molding or a combination thereof.

6. The process as claimed in claim 1, wherein the working temperature is in the range from minus 10°C to 150°C, preferably 10 to 50°C.

7. The process as claimed in claim 1 or the filter as claimed in claim 2, wherein the organic substance to be removed is an aliphatic or aromatic compound.

8. The process as claimed in claim 1 or the filter as claimed in claim 2, wherein the organic substance to be removed is at least one compound which is contained in gasoline vapors.

9. The process as claimed in claim 1 or the filter as claimed in claim 2, wherein the organic substance to be removed is a saturated or unsaturated hydrocarbon, preferably benzene, toluene, tert-butyl methyl ether or linear or branched C₄ to C₁₂ alkanes.

10. The process as claimed in claim 1 or the filter as claimed in claim 2, wherein the filter comprises a combination of an ozone filter and a filter for organic substances or comprises a single filter which includes both filter units.

## Revendications

1. Procédé pour l'élimination de l'ozone et de matières organiques dans des gaz, caractérisé en ce que le gaz est d'abord mis en contact avec un polymère fixant l'ozone du groupe des éthers de polyarylène et des polymères contenant du soufre, puis avec du charbon actif.

2. Filtre pour l'élimination de l'ozone et de matières organiques dans des gaz, caractérisé en ce que le filtre contient au moins un polymère fixant l'ozone du groupe des éthers de polyarylène, et des polymères contenant du soufre, ainsi que du charbon actif.

3. Procédé suivant la revendication 1 ou filtre suivant la revendication 2, caractérisé en ce que le polymère fixant l'ozone est un poly(oxyde de 2,6-diméthylphénylène) ou un poly(thioéther d'arylène), de préférence un poly(sulfure de phénylène).

4. Procédé suivant la revendication 1 ou filtre suivant la revendication 2, caractérisé en ce que l'éther de polyarylène contient des unités 2,6-diméthylphénoxy.

5. Procédé suivant la revendication 1 ou filtre suivant la revendication 2, caractérisé en ce que le polymère fixant l'ozone est utilisé sous forme de poudre, de granulés, de fibres, de toison, de feutre, de tissu, de fibres artificielles, de film, de portion de film, de corps moulé ou d'une combinaison de ceux-ci.

6. Procédé suivant la revendication 1, caractérisé en ce que la température de travail se trouve dans l'intervalle de -10°C à 150°C, de préférence de 10 à 50°C.

7. Procédé suivant la revendication 1 ou filtre suivant la revendication 2, caractérisé en ce que la matière organique à éliminer est un composé aliphatique ou aromatique.

8. Procédé suivant la revendication 1 ou filtre suivant la revendication 2, caractérisé en ce que la matière organique à éliminer est au moins un composé contenu dans les vapeurs d'essence.

9. Procédé suivant la revendication 1 ou filtre suivant la revendication 2, caractérisé en ce que la matière organique à éliminer est un hydrocarbure saturé ou insaturé, de préférence le benzène, le toluène, le tert-butylméthyléther, un alcane en C₄ à C₁₂ linéaire ou ramifié.

10. Procédé suivant la revendication 1 ou filtre suivant la revendication 2, caractérisé en ce que le filtre est constitué d'une combinaison d'un filtre à ozone et d'un filtre à matières organiques, ou d'un filtre unique contenant ces deux unités de filtre.
